# EUROPÄISCHE PATENTSCHRIFT

(11) **EP 3 333 475 B1**
(45) Veröffentlichungstag und Bekanntmachung des Hinweises auf die Patenterteilung: **24.03.2021**
(21) Anmeldenummer: 16202391.5
(22) Anmeldetag: 06.12.2016
(51) Int. Cl.: F17C 1/16

(54) **DRUCKGASFLASCHE**
COMPRESSED GAS CYLINDER
BOUTEILLE DE GAZ SOUS PRESSION

(43) Veröffentlichungstag der Anmeldung: 13.06.2018
(73) Patentinhaber: Magna Energy Storage Systems GesmbH, 8261 Sinabelkirchen (AT)
(72) Erfinder: SCHWARZL, Gerald, 8160 Weiz (AT); RATH-REBER, Gerald, 8283 Bad Blumau (AT)
(74) Vertreter: Zangger, Bernd

(56) Entgegenhaltungen:
- EP-A1- 0 552 915
- WO-A2-2011/132063
- US-A1- 2011 210 515

## Beschreibung

### Gebiet der Erfindung

Die vorliegende Erfindung betrifft eine Druckgasflasche, umfassend einen Flaschenhals und ein Ventil zur Entnahme eines gespeicherten Druckgases aus der Druckgasflasche, wobei das Ventil im Flaschenhals angeordnet ist.

### Stand der Technik

Druckgasflaschen werden verwendet um Gase unter hohem Druck zu speichern, insbesondere um Druckgase wie CNG (Compressed Natural Gas) als Antriebsmedium für Erdgasfahrzeuge bereit zu stellen.

Derartige Druckgasflaschen umfassen üblicherweise ein Ventil zur Entnahme des gespeicherten Druckgases aus der Druckgasflasche, wobei das Ventil in einem Flaschenhals der Druckgasflasche angeordnet ist.

Derartige Entnahmeventile sind jedoch gefährdet, durch Verschmutzungen des Druckgases die beispielsweise aus der Herstellung der Druckgasflasche stammen können, beschädigt zu werden.

Um das Ventil vor derartigen Verschmutzungen zu schützen, ist es bekannt in ein Ventil ein Filter zu integrieren, dass größere Partikel, die das Ventil beschädigen könnten, aus dem Gasstrom ausfiltert.

Derartige integrierte Filter haben jedoch aufgrund des beschränkten Bauraums nur eine beschränkte Aufnahmekapazität für Schmutz-Partikel. Der Aufbau und der Austausch solcher Ventile ist teuer.

Aus der EP 0 552 915 A1 ist eine Dichtungsplatte mit einem Filter für eine Hochdruck-Flüssiggaskartusche mit einem Siphonrohr bekannt, wobei ein Filter, das wie eine Säule mit einer Nut ausgebildet ist, die an einem Ende in axialer Richtung eine Öffnung aufweist, an dem Hauptkörper angebracht ist, indem die Öffnung der Nut auf die Innenebene des Hauptkörpers gerichtet wird und gegebenenfalls die äußere Umfangsebene des Filters auf eine innere Umfangsebene eines Ringschenkels des Hauptkörpers passt.

### Zusammenfassung der Erfindung

Es ist eine Aufgabe der Erfindung, eine Druckgasflasche der genannten Art in dieser Hinsicht zu verbessern und insbesondere eine Druckgasflasche anzugeben, die eine hohe Aufnahmekapazität für auszufilternde Partikel aufweist.

Die Lösung der Aufgabe erfolgt durch eine Druckgasflasche mit den Merkmalen gemäß Anspruch 1.

Die Druckgasflasche umfasst einen Flaschenhals, ein Ventil zur Entnahme eines gespeicherten Druckgases aus der Druckgasflasche, wobei das Ventil im Flaschenhals angeordnet ist, und ein Filter zur Filterung von Verunreinigungen des Druckgases, wobei radial innen im Flaschenhals eine Stützhülse zur Abstützung des Flaschenhalses angeordnet ist und wobei radial innen an der Stützhülse das Filter befestigt ist. Erfindungsgemäß ist vorgesehen das Filter zum Schutz eines im Flaschenhals angeordneten Entnahmeventils nicht in das Ventil selbst zu integrieren, sondern als eigenständiges Bauteil an einer Stützhülse zu befestigen, die den Flaschenhals abstützt. Die Stützhülse weist daher den größtmöglichen Querschnitt im Bereich des Flaschenhalses auf und ermöglicht somit zusätzlich zu einer mechanischen Abstützung des Flaschenhalses die Unterbringung eines Filters mit hoher Aufnahmekapazität. Zudem kann das Filter unabhängig vom verwendeten Ventil eingebaut und eventuell ersetzt werden. Der gesamte Aufbau der Druckgasflasche wird durch eine solche Anordnung einer Stützhülse mit innenliegendem Filter auch robuster.

Die Druckgasflasche besteht erfindungsgemäß aus Faserverbundwerkstoff und weist einen inneren Liner auf, wobei die Stützhülse das offene Ende des inneren Liners abstützt, welches den Flaschenhals bildet.

Das Ventil ist erfindungsgemäß in einer Ventilaufnahme befestigt, wobei die Ventilaufnahme am inneren Liner der Druckgasflasche befestigt ist, insbesondere mit dem inneren Liner verschraubt.

Bevorzugt ist das Filter in die Stützhülse eingepresst.

Das Ventil ist bevorzugt näher zum offenen Ende des Flaschenhalses angeordnet, als das Filter und vorzugsweise auch näher als die Stützhülse. Das aus der Druckgasflasche ausströmende Gas strömt somit zuerst durch das Filter und erst anschließend durch das Ventil im Flaschenhals.

Das Ventil kann insbesondere ein Magnetventil sein.

Die Ventilaufnahme kann den inneren Liner radial außen umfangen und so den Liner von außen abstützen, während die Stützhülse ihn von innen abstützt.

Das Ventil kann im Wesentlichen axial außerhalb des inneren Liners angeordnet sein.

Das Filter umfasst bevorzugt einen Filterrahmen, wobei der Filterrahmen in die Stützhülse eingepresst sein kann. Der Filterrahmen kann, wie auch der Flaschenhals und die Stützhülse bevorzugt einen runden Querschnitt aufweisen. Im Inneren des Filterrahmens kann das Filter ein Netz mit einer vorgegebenen Maschenweite aufweisen, beispielsweise zwischen 30 µm und 300 µm, insbesondere eine Maschenweite von etwa 40 µm oder von etwa 100 µm.

Der Filterrahmen kann an seinem der Öffnung des Flaschenhalses zugewandten Ende eine Ausformung radial nach außen aufweisen, zum Einhaken des Filterrahmens am Ende der Stützhülse und/oder am Ende des inneren Liners, so dass das Filter axial formschlüssig gehalten ist.

### Kurzbeschreibung der Zeichnungen

Die Erfindung wird im Folgenden beispielhaft unter Bezugnahme auf die Zeichnungen beschrieben.
- Fig. 1: zeigt einen Ausschnitt eines Flaschenhalses einer erfindungsgemäßen Druckgasfalsche in einer Schnittdarstellung.
- Fig. 2: zeigt das Filter einer erfindungsgemäßen Druckgasflasche gemäß Fig. 1 von unten.
- Fig. 3: zeigt das Filter gemäß Fig. 2 von der Seite.
- Fig. 4: zeigt eine Schnittdarstellung gemäß A-A in Fig. 2.
- Fig. 5: zeigt das Filter gemäß Fig. 2 in einer dreidimensionalen Darstellung.

### Detaillierte Beschreibung der Erfindung

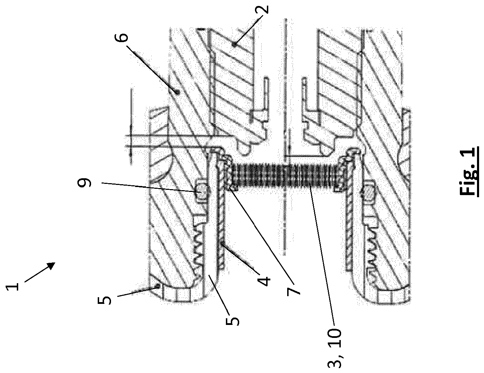

In Fig. 1 ist ein Flaschenhals 1 einer erfindungsgemäßen Druckgasfalsche in einer Schnittdarstellung dargestellt.

Im Flaschenhals 1 ist ein Ventil 2 zur Entnahme eines gespeicherten Druckgases, insbesondere von CNG (Compressed Natural Gas), angeordnet, das als Magnetventil ausgeführt ist.

Die Druckgasflasche besteht großteils aus Faserverbundwerkstoff und weist einen inneren Liner 5 auf, der zumindest eine Innenschicht der Druckgasflasche bildet und im Flaschenhals 1 endet.

Radial innen ist der innere Liner 5 durch eine Stützhülse 4 abgestützt, so dass durch die Stützhülse 4 das offene Ende des inneren Liners 5 am Flaschenhals 1 gegenüber Verformungen nach innen gestützt ist.

Das Ventil 2 ist ein Magnetventil und ist in einer Ventilaufnahme 6 befestigt, wobei die Ventilaufnahme 6 selbst am Außenumfang des inneren Liners 5 mit diesem verschraubt ist. Die Ventilaufnahme 6 umfängt daher den inneren Liner 5 radial außen und stützt diesen außen ab. Zwischen Ventilaufnahme 6 und innerem Liner 5 ist eine Ringdichtung 9 angeordnet.

Das Magnetventil 2 selbst ist axial außerhalb des inneren Liners 5 und außerhalb der Stützhülse 4 angeordnet, also nahe dem offenen Ende des Flaschenhalses 1 der Druckgasflasche.

Axial weiter innen im Flaschenhals 1 liegt ein Filter 3 zur Filterung von Verunreinigungen des Druckgases. Das Filter 3 weist außen umlaufend einen Filterrahmen 7 auf und ist über diesen Filterrahmen 7 in die Stützhülse 4 eingepresst.

Der Filterrahmen 7 weist an seinem der Öffnung des Flaschenhalses 1 zugewandten Ende eine zweistufige Ausformung 8 radial nach außen auf, so dass der Filterrahmen 7 am axial außen liegenden freien Ende der Stützhülse 4 und des inneren Liners 5 anliegen kann.

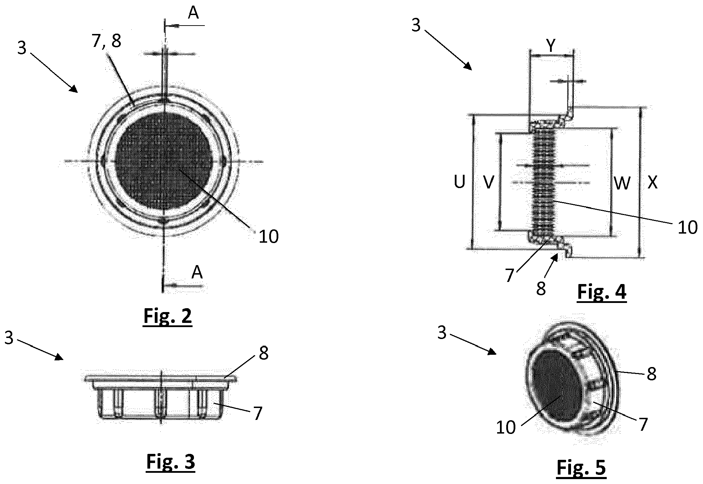

Die zweistufige Ausformung 8 ist gut ersichtlich in den Fig. 2 bis 5, die das Filter 3 in einem nicht verbauten Zustand zeigen. Das Filter 3 weist einen Filterrahmen 7 mit kreisförmigem Querschnitt und axial der beschriebenen Ausformung 8 auf. Zusätzlich erstrecken sich in axialer Richtung über den Umfang des Filterrahmens 7 verteilt längliche Noppen zur radialen Sicherung des Filterahmens 7. Im inneren des Filterrahmens 7 ist ein Filterboden 10 mit ebenfalls kreisförmigem Querschnitt angebracht. Der Filterboden 10 kann eine Maschenweite von zum Beispiel 40 µm aufweisen, je nach gewünschter Funktion des Filters.

Weitere Dimensionen des Filters 3 sind in Fig. 4 beispielhaft angegeben. Der Filterrahmen 7 weist im verbauten Zustand axial innen liegend einen geringsten Durchmesser von V = 18 mm auf, im Bereich der Halterung des Filterbodens 10 einen Durchmesser von W = 20 mm, an der Außenseite der ersten Abstufung der Ausformung 8 einen Durchmesser von U = 25 mm und am Ende der zweiten Abstufung einen Durchmesser von X = 28 mm. Die Höhe Y des Filterrahmens 7 beträgt 8 mm.

### Bezugszeichenliste

- 1: Flaschenhals
- 2: Ventil
- 3: Filter
- 4: Stützhülse
- 5: innerer Liner
- 6: Ventilaufnahme
- 7: Filterrahmen
- 8: Ausformung
- 9: Ringdichtung
- 10: Filterboden

- A-A: Schnitt

- U: Durchmesser
- V: Durchmesser
- W: Durchmesser
- X: Durchmesser
- Y: Höhe

## Patentansprüche

1. Druckgasflasche, umfassend einen Flaschenhals (1), ein Ventil (2) zur Entnahme eines gespeicherten Druckgases aus der Druckgasflasche, wobei das Ventil (2) im Flaschenhals (1) angeordnet ist, und ein Filter (3) zur Filterung von Verunreinigungen des Druckgases, wobei radial innen im Flaschenhals (1) eine Stützhülse (4) zur Abstützung des Flaschenhalses (1) angeordnet ist und dass radial innen an der Stützhülse (4) das Filter (3) befestigt ist,
**dadurch gekennzeichnet, dass** die Druckgasflasche aus Faserverbundwerkstoff besteht und einen inneren Liner (5) aufweist, wobei die Stützhülse (4) das offene Ende des inneren Liners (5) am Flaschenhals (1) abstützt, wobei das Ventil (2) in einer Ventilaufnahme (6) befestigt ist, wobei die Ventilaufnahme (6) am inneren Liner (5) der Druckgasflasche befestigt ist.

2. Druckgasflasche nach Anspruch 1,
**dadurch gekennzeichnet, dass** das Filter (3) in die Stützhülse (4) eingepresst ist.

3. Druckgasflasche nach zumindest einem der vorhergehenden Ansprüche,
**dadurch gekennzeichnet, dass** das Ventil (2) näher zum offenen Ende des Flaschenhalses (1) angeordnet ist, als das Filter (3).

4. Druckgasflasche nach zumindest einem der vorhergehenden Ansprüche,
**dadurch gekennzeichnet, dass** das Ventil (2) in einer Ventilaufnahme (6) befestigt ist, wobei die Ventilaufnahme (6) mit dem inneren Liner (5) verschraubt ist.

5. Druckgasflasche nach zumindest einem der vorhergehenden Ansprüche,
**dadurch gekennzeichnet, dass** die Ventilaufnahme (6) den inneren Liner (5) radial außen umfängt.

6. Druckgasflasche nach zumindest einem der vorhergehenden Ansprüche,
**dadurch gekennzeichnet, dass** das Ventil (2) im Wesentlichen axial außerhalb des inneren Liners (5) angeordnet ist.

7. Druckgasflasche nach zumindest einem der vorhergehenden Ansprüche,
**dadurch gekennzeichnet , dass** das Filter (3) einen Filterrahmen (7) umfasst, wobei der Filterrahmen (7) in die Stützhülse (4) eingepresst ist.

8. Druckgasflasche nach Anspruch 7,
**dadurch gekennzeichnet, dass** der Filterrahmen (7) an seinem der Öffnung des Flaschenhalses (1) zugewandten Ende eine Ausformung (8) radial nach außen aufweist, zum Anliegen am Ende der Stützhülse (4) und/oder am Ende des inneren Liners (5).

## Claims

1. Compressed gas cylinder comprising a cylinder neck (1), a valve (2) for extraction of a stored compressed gas from the compressed gas cylinder, wherein the valve (2) is arranged in the cylinder neck (1), and a filter (3) for filtering contaminants from the compressed gas, wherein a support sleeve (4) for supporting the cylinder neck (1) is arranged in the cylinder neck (1) radially at the inside, and wherein the filter (3) is fastened to the support sleeve (4) radially at the inside,
**characterized in that** the compressed gas cylinder consists of fibre composite material and has an inner liner (5), wherein the support sleeve (4) supports the open end of the inner liner (5) against the cylinder neck (1), wherein the valve (2) is fastened in a valve receptacle (6), wherein the valve receptacle (6) is fastened to the inner liner (5) of the compressed gas cylinder.

2. Compressed gas cylinder according to Claim 1,
**characterized in that** the filter (3) is pressed into the support sleeve (4).

3. Compressed gas cylinder according to at least one of the preceding claims,
**characterized in that** the valve (2) is arranged closer to the open end of the cylinder neck (1) than the filter (3).

4. Compressed gas cylinder according to at least one of the preceding claims,
**characterized in that** the valve (2) is fastened in a valve receptacle (6), wherein the valve receptacle (6) is screwed to the inner liner (5).

5. Compressed gas cylinder according to at least one of the preceding claims,
**characterized in that** the valve receptacle (6) surrounds the inner liner (5) radially at the outside.

6. Compressed gas cylinder according to at least one of the preceding claims,
**characterized in that** the valve (2) is arranged substantially axially outside the inner liner (5).

7. Compressed gas cylinder according to at least one of the preceding claims,
**characterized in that** the filter (3) comprises a filter frame (7), wherein the filter frame (7) is pressed into the support sleeve (4).

8. Compressed gas cylinder according to Claim 7,
**characterized in that** the filter frame (7) has radially to the outside at its end facing the opening of the cylinder neck (1) a formation (8) for abutment against the end of the support sleeve (4) and/or against the end of the inner liner (5).

## Revendications

1. Bouteille de gaz sous pression, comprenant un col de bouteille (1), une soupape (2) pour le soutirage d'un gaz sous pression stocké hors de la bouteille de gaz sous pression, la soupape (2) étant agencée dans le col de bouteille (1), et un filtre (3) pour la filtration d'impuretés du gaz sous pression, une douille de soutien (4) pour le soutien du col de bouteille (1) étant agencée radialement à l'intérieur dans le col de bouteille (1) et le filtre (3) étant fixé radialement à l'intérieur sur la douille de soutien (4),
**caractérisée en ce que** la bouteille de gaz sous pression est constituée de matériau composite fibreux et comprend un liner interne (5), la douille de soutien (4) soutenant l'extrémité ouverte du liner interne (5) sur le col de bouteille (1), la soupape (2) étant fixée dans un logement de soupape (6), le logement de soupape (6) étant fixé sur le liner interne (5) de la bouteille de gaz sous pression.

2. Bouteille de gaz sous pression selon la revendication 1, **caractérisée en ce que** le filtre (3) est enfoncé dans la douille de soutien (4).

3. Bouteille de gaz sous pression selon au moins l'une quelconque des revendications précédentes, **caractérisée en ce que** la soupape (2) est agencée plus à proximité de l'extrémité ouverte du col de bouteille (1) que le filtre (3).

4. Bouteille de gaz sous pression selon au moins l'une quelconque des revendications précédentes, **caractérisée en ce que** la soupape (2) est fixée dans un logement de soupape (6), le logement de soupape (6) étant assemblé par vissage avec le liner interne (5).

5. Bouteille de gaz sous pression selon au moins l'une quelconque des revendications précédentes, **caractérisée en ce que** le logement de soupape (6) entoure le liner interne (5) radialement vers l'extérieur.

6. Bouteille de gaz sous pression selon au moins l'une quelconque des revendications précédentes, **caractérisée en ce que** la soupape (2) est agencée essentiellement axialement à l'extérieur du liner interne (5).

7. Bouteille de gaz sous pression selon au moins l'une quelconque des revendications précédentes, **caractérisée en ce que** le filtre (3) comprend un cadre de filtre (7), le cadre de filtre (7) étant enfoncé dans la douille de soutien (4).

8. Bouteille de gaz sous pression selon la revendication 7, **caractérisée en ce que** le cadre de filtre (7) comprend une formation (8) radialement vers l'extérieur sur son extrémité tournée vers l'ouverture du col de bouteille (1), pour l'application contre l'extrémité du col de soutien (4) et/ou contre l'extrémité du liner interne (5).
